# EUROPÄISCHE PATENTSCHRIFT

(11) **EP 3 406 016 B1**
(45) Veröffentlichungstag und Bekanntmachung des Hinweises auf die Patenterteilung: **31.07.2019**
(21) Anmeldenummer: 18711302.2
(22) Anmeldetag: 13.03.2018
(51) Int. Cl.: H02J 3/14, H02J 3/38, H02J 3/00

(54) **SYSTEM ZUR VERTEILUNG LOKAL ERZEUGTER ENERGIE AUF MEHRERE LASTEINHEITEN**
SYSTEM FOR DISTRIBUTING LOCALLY GENERATED ENERGY TO MULTIPLE LOAD UNITS
SYSTÈME DE DISTRIBUTION D'UNE ÉNERGIE LOCALEMENT PRODUITE SUR PLUSIEURS UNITÉS DE CHARGE

(30) Priorität: 13.04.2017 DE 102017108121
(43) Veröffentlichungstag der Anmeldung: 28.11.2018
(73) Patentinhaber: SMA Solar Technology AG, 34266 Niestetal (DE)
(72) Erfinder: ALLERT, Claus, 34260 Kaufungen (DE); WACHENFELD, Volker, 34369 Hofgeismar (DE); BUKVIC-SCHÄFER, Aleksandra-Sasa, 34119 Kassel (DE)
(86) Internationale Anmeldenummer: PCT/EP2018/056218
(87) Internationale Veröffentlichungsnummer: WO 2018/188872

(56) Entgegenhaltungen:
- EP-A2- 2 993 752
- WO-A1-2015/015528
- DE-A1-102015 110 651
- US-A1- 2011 080 044
- US-A1- 2015 155 745

## Beschreibung

Die Erfindung bezieht sich auf ein System zur besseren Verteilung lokal erzeugter Energie. Das System weist mehrere lokale Lasteinheiten auf und die lokal erzeugte Energie kann mittels einer gemeinsam genutzten erneuerbaren Gleichstromquelle bereitgestellt werden. Des Weiteren betrifft die Erfindung auch einen Nachrüstsatz für einen elektrischen Verteiler.

Das Problem der Verteilung lokal erzeugter Energie stellt sich beispielsweise bei Mehrfamilienhäusern, wenn mehrere Familien bzw. Nutzergruppen eine gemeinsame lokale Energiequelle nutzen wollen, gleichzeitig aber auch mit einem Verbundnetz, beispielsweise einem öffentlichen Energienetz, verbunden sind. Die Verteilung der Energieflüsse auf die Nutzergruppen, die Erfassung jeweils der verbrauchten Energiemengen, sowie administrative Regelungen der Verbundnetzbetreiber machen die gemeinsame Nutzung von dezentralen, insbesondere erneuerbaren Energiequellen aufwändig und in der Folge kostenintensiv. Bisher werden daher entweder lokale Energieerzeugungsanlagen für nur eine Nutzergruppe betrieben oder große Anlagen speisen in ein größeres Verbundnetz ein, um über die bereits existierenden Verbundnetze und Energiezähler verteilt und erfasst zu werden. Da in vielen Ländern die Einspeisung von regenerativer Energie in die Verbundnetze finanziell immer weniger attraktiv ist, wird der Eigenverbrauch aus lokalen, erneuerbaren Energiequellen interessanter. Gleichzeitig ist dies aber auch sinnvoll, da so die Verbundnetze mit der schwankenden Menge an regenerativer Energie nicht belastet werden, mithin lokale Erzeugung und lokaler Verbrauch zusammenkommen.

Die gemeinsame Nutzung einer lokalen, regenerativen Energiequelle bleibt daher bislang meist aus, obwohl gerade durch die gemeinsame Nutzung beispielsweise einer Photovoltaikanlage auf dem Dach eines Mehrfamilienhauses die Eigenverbrauchsquote deutlich erhöht werden kann. Mit der Anzahl der unterschiedlichen Nutzer steigt die Variation der Energiebezugsgewohnheiten an, wie auch in den Verbundnetzen sich Lastspitzen und -tiefs durch die große Anzahl der Verbraucher statistisch ausgleichen. Analog dazu kann in einem Mehrfamilienhaus lokal erzeugte Energie durch die verteilte Nutzung von tag- oder nachtaktiven Einzelpersonen, Familien mit unterschiedlichen Gewohnheiten zu kochen, waschen oder andere elektrische oder elektronische Geräte zu benutzen, eine Vergleichmäßigung der Verbräuche bewirken und so dazu führen, dass die Energieerzeugungsanlage optimal genutzt werden kann. Bleibt trotzdem noch ein Energieüberschuss, so kann ein Energiespeicher vorgesehen werden. Dieser kann jedoch wesentlich kleiner und damit kostengünstiger ausfallen als dies bei einer einzeln genutzten Anlage oder eben mehreren einzeln genutzten Anlage in Summe der Fall wäre.

Im Stand der Technik bekannt ist es, zur gemeinsamen Nutzung einer lokalen, regenerativen Energiequelle durch mehrere Nutzergruppen eine zentrale Steuereinrichtung vorzusehen, wie beispielsweise in der EP 2 993 752 A2 offenbart. Dabei ist für jede Nutzergruppe ein Wechselrichter und ein Stromzähler vorgesehen und jeder Wechselrichter ist steuerbar mit einer zentralen Steuereinrichtung verbunden, wobei die zentrale Steuereinrichtung die Aufteilung der bereitzustellenden elektrischen Leistung auf die Nutzergruppe vornimmt. Die Installation, Betrieb und Wartung einer solchen zentralen Steuereinrichtung ist mit Aufwand und Kosten verbunden. So wurde im Rahmen der Erfindung überraschenderweise gefunden, dass auch ohne zentrale Steuereinrichtung eine einfache und kostengünstige Aufteilung der bereitzustellenden elektrischen Leistung auf die Nutzergruppe möglich ist.

Ein erfindungsgemäßes System zur Verteilung lokal erzeugter Energie aus mindestens einer erneuerbaren Gleichstromquelle auf mehrere lokale Lasteinheiten des Systems umfasst pro Lasteinheit einen Eingang, der eingerichtet ist, mit einem Verbundnetz verbunden zu werden und einen Ausgang, der eingerichtet ist, mit mindestens einer Last verbunden zu werden. Die Lasteinheiten enthalten je einen Wechselrichter mit einem Wechselrichtereingang und einem Wechselrichterausgang, wobei der Wechselrichtereingang mit der Gleichstromquelle verbunden ist und der Wechselrichterausgang mit dem Eingang und dem Ausgang der jeweiligen Lasteinheit verbunden ist. Der Wechselrichter wandelt einen Gleichstrom an dem Wechselrichtereingang in einen Wechselstrom an dem Wechselrichterausgang. Ferner enthalten die Lasteinheiten einen Leistungsmesser mit einem Leistungsmessereingang, der mit dem Eingang der jeweiligen Lasteinheit verbunden ist, um einen aktuellen Leistungsbezug aus dem Verbundnetz zu ermitteln und mit einem Leistungsmesserausgang, der mit dem Wechselrichter der jeweiligen Lasteinheit verbunden ist. Der Leistungsmesserausgang übermittelt Daten über den aktuellen Leistungsbezug aus dem Verbundnetz an den Wechselrichter. Gleichzeitig ermittelt der Wechselrichter der jeweiligen Lasteinheit eine an seinem Wechselrichtereingang anliegende Eingangsgleichspannung und bestimmt aus der anliegenden Eingangsgleichspannung und den übermittelten Leistungsbezugsdaten eine aktuell zu wandelnde Leistung.

Auf diese Weise sind die Lasteinheiten parallel zueinander zwischen Verbundnetz und lokaler Gleichstromquelle angeordnet und die zugehörigen Wechselrichter agieren autonom ohne eine übergeordnete Steuerung. Der Leistungsmesser kann ein Stromzähler sein, wie er in der zugehörigen Lasteinheit, beispielsweise einer Wohnung eines Mehrfamilienhauses, üblicherweise vorhanden ist. Der Leistungsmesser ermittelt den aktuellen Leistungsbezug aus dem Verbundnetz und übermittelt diesen Wert an den zugehörigen Wechselrichter drahtgebunden oder drahtlos. Am Ausgang der Lasteinheit können Lasten angeschlossen werden. Dabei kann es sich dabei beispielsweise um haushaltsübliche Lasten wie Herde, Spülmaschinen, Waschmaschinen, Leuchtmittel oder ähnliches handeln. Ist der Wechselrichter aktiv, wandelt dieser also eingangsseitig vorhandenen Gleichstrom in netzkonformen Wechselstrom, so können die Lasten mit Leistung aus dem Verbundnetz und aus der lokalen Gleichstromquelle versorgt werden. Dabei können einphasige oder mehrphasige Wechselrichter zu Einsatz kommen. Da in vielen Ländern die elektrischen Lasten auf mehrere Phasen eines Netzes aufgeteilt angeschlossen werden, wird man Wechselrichter wählen, die an die jeweiligen Gegebenheiten angepasst sind. Aus den übermittelten Leistungsmesserdaten kann der zugehörige Wechselrichter die Leistung ermitteln, die zum aktuellen Zeitpunkt zusätzlich aus der lokalen Gleichstromquelle zu wandeln wäre, um die Lasten vollständig aus der lokalen Gleichstromquelle zu versorgen. Gleichzeitig ermittelt der zugehörige Wechselrichter auch Messwerte, die die an seinem Eingang anliegende Eingangsgleichspannung charakterisieren, beispielsweise die Amplitude der Eingangsgleichspannung. Es kann sich dabei auch um ein auf die Eingangsgleichspannung aufmoduliertes Signal handeln, was wie die Eingangsgleichspannung selbst von der lokalen Gleichstromquelle generiert wird.

Bei vielen Generatoren sinkt bei Belastung die Klemmenspannung ab, ähnlich kann sich beispielsweise eine als Photovoltaikgenerator ausgebildete lokale Gleichstromquelle verhalten oder dieses Generatorverhalten kann durch eine an den Photovoltaikgenerator angeschlossene Gleichstromstellerstufe (DC/DC-Wandler) nachgebildet werden. So kann die Klemmenspannung als Maß für die Belastung des Generators fungieren, beziehungsweise aus der Höhe der Klemmenspannung auf Leistungsreserven des Generators geschlossen werden. Eine an den Photovoltaikgenerator angeschlossene Gleichstromstellerstufe könnte auch ein Signal aufmodulieren, aus dem sich die Leistungsreserven des Photovoltaikgenerators ableiten lassen. Ermittelt nun der zur jeweiligen Lasteinheit zugehörige Wechselrichter eine aktuelle Eingangsspannungshöhe oder ein entsprechendes Signal das/die mit zunehmender Belastung variiert, kann der Wechselrichter, beispielsweise durch einen Vergleich mit hinterlegten Schwellwerten, Kennlinien oder Ähnlichem, ermitteln, ob die lokale Gleichstromquelle noch über Leistungsreserven verfügt. Aus dem Vergleich von Indikatoren für Leistungsreserven und dem aktuellen Leistungsbezug aus dem Verbundnetz, kann eine aktuell zu wandelnde Leistung bestimmt werden. Dies kann beispielsweise die Leistung sein, die zum aktuellen Zeitpunkt zusätzlich aus der lokalen Gleichstromquelle zu wandeln wäre, um die Lasten vollständig aus der lokalen Gleichstromquelle zu versorgen, wenn ausreichend Leistungsreserven vorhanden sind. Oder die aktuell zu wandelnde Leistung kann einem Anteil der Leistung entsprechen, die zum aktuellen Zeitpunkt zusätzlich aus der lokalen Gleichstromquelle zu wandeln wäre, um die Lasten vollständig aus der lokalen Gleichstromquelle zu versorgen.

In einer vorteilhaften Ausführungsform des erfindungsgemäßen Systems ermittelt der Wechselrichter der jeweiligen Lasteinheit aus der an seinem Wechselrichtereingang anliegenden Eingangsgleichspannung gemäß einer vorgegebenen ersten Kennlinie eine maximal mögliche aktuell wandelbare Leistung. Eine solche Kennlinie kann beispielsweise einen linearen Zusammenhang zwischen der Eingangsgleichspannung und der maximal möglichen vom betreffenden Wechselrichter wandelbaren Leistung herstellen, so dass bei einer mittleren Belastung der Gleichstromquelle die vom Wechselrichter gewandelte Leistung an die von den angeschlossenen Lasten benötigte Leistung angepasst werden kann. So könnte der Wechselrichter beispielsweise seine aktuelle gewandelte Leistung entlang der Kennlinie erhöhen, bis alle Lasten versorgt sind oder die maximale Leistungsfähigkeit der Gleichstromquelle, d.h. die maximal mögliche aktuell wandelbare Leistung, erreicht ist.

Eine weitere vorteilhafte Ausführungsform des erfindungsgemäßen Systems sieht vor, dass der Wechselrichter der jeweiligen Lasteinheit, falls die maximal mögliche aktuell wandelbare Leistung größer oder gleich groß ist wie der Leistungsbezug aus dem Verbundnetz, die aktuell zu wandelnde Leistung so bestimmt, dass der Leistungsbezug aus dem Verbundnetz gegen einen voreingestellten Grenzwert geht. In einem kontinuierlichen Verfahren ermittelt der Wechselrichter der jeweiligen Lasteinheit die Höhe des aktuellen Leistungsbezuges aus dem Verbundnetz und versucht, in einer Ausführungsform der vorliegenden Erfindung, die von ihm gewandelte Leistung so anzupassen, dass sie hinterlegten Vorgaben entspricht. Beispielsweise könnte eine Obergrenze für den Leistungsbezug der betrachteten Lasteinheit aus dem Verbundnetz eingestellt sein, so dass der zugehörige Wechselrichter die von ihm gewandelte Leistung soweit anhebt oder absenkt, bis diese Obergrenze erreicht ist.

Eine weitere Variante könnte darin bestehen, für den Leistungsbezug aus der lokalen Gleichstromquelle einen Grenzwert zu hinterlegen, so dass der Wechselrichter seine aktuell gewandelte Leistung nur so weit anhebt, bis dieser Grenzwert erreicht ist und jeder weitere Verbrauch der angeschlossenen Lasten aus dem Verbundnetz erfolgt. Denkbar ist es auch, dass das Regelziel für den Wechselrichter der jeweiligen Lasteinheit darin besteht, dass immer ein bestimmter Anteil der in der jeweiligen Lasteinheit verbrauchten Energie aus der lokalen Gleichstromquelle entnommen wird. Voraussetzung dafür ist, dass die lokale Gleichstromquelle über ausreichende Leistungsreserven verfügt und der Bedarf auf Seiten der angeschlossenen Lasten besteht.

In einer besonders bevorzugten Ausführungsform des erfindungsgemäßen Systems beträgt der voreingestellte Grenzwert 0 KW, was bedeutet, dass der Wechselrichter der jeweiligen Lasteinheit, falls die maximal mögliche aktuell wandelbare Leistung mindestens gleich groß ist wie der des Leistungsbezug aus dem Verbundnetz, die aktuell zusätzlich zu wandelnde Leistung so bestimmt, dass sie der Höhe des Leistungsbezuges aus dem Verbundnetz entspricht. Der Wechselrichter der jeweiligen Lasteinheit hebt in der Folge seine aktuell gewandelte Leistung um die Höhe des vorher ermittelten Leistungsbezuges aus dem Verbundnetz an, so dass dann die an die jeweilige Lasteinheit angeschlossenen Lasten vollständig aus der lokalen Gleichstromquelle versorgt werden.

Falls die maximal mögliche aktuell wandelbare Leistung kleiner ist als der Leistungsbezug aus dem Verbundnetz, bestimmt der Wechselrichter der jeweiligen Lasteinheit in einer weiteren bevorzugten Ausführungsform des erfindungsgemäßen Systems die aktuell zu wandelnde Leistung so, dass die aktuell zu wandelnde Leistung der maximal möglichen aktuell wandelbaren Leistung entspricht. Auf diese Weise wird der Leistungsbezug aus dem Verbundnetz minimiert. Dies bedeutet, wenn das Leistungsangebot der lokalen Geleichstromquelle nicht ausreichend ist, um beispielsweise alle an die jeweilige Lasteinheit angeschlossenen Lasten im gewünschten Maße zu versorgen, dass der Wechselrichter der jeweiligen Lasteinheit die von ihm gewandelte Leistung wenigstens um den maximal möglichen Betrag anhebt.

In einer vorteilhaften Ausführungsform des erfindungsgemäßen Systems sind die Wechselrichter der jeweiligen Lasteinheiten als unidirektionale und ggfls. als galvanisch-trennende Wechselrichter ausgebildet. Selbst wenn in einem erfindungsgemäßen System auf der Gleichspannungsseite ein elektrischer Speicher bereitgestellt ist, ist ein Energiefluss von der Wechselspannungsseite zur Gleichspannungsseite der Wechselrichter des erfindungsgemäßen Systems nicht vorgesehen. Daher sind Wechselrichter, deren Halbleiterschalter auf die Energieflussrichtung von DC nach AC optimiert sind, ausreichend und senken damit die Kosten des erfindungsgemäßen Systems. Um eine elektrische Entkopplung der Gleichspannungsseite von der Wechselspannungsseite zu gewährleisten, können die Wechselrichter als galvanisch-trennende Wechselrichter ausgebildet sein.

In einer weiteren vorteilhaften Ausführungsform des erfindungsgemäßen Systems unterscheiden sich die ersten Kennlinien der jeweiligen Lasteinheiten voneinander. Auf diese Weise können unterschiedliche Regelvorgaben für die Wechselrichter der jeweiligen Lasteinheiten festgelegt werden. Die unterschiedlichen Kennlinien können in Steuerungsbaugruppen der jeweiligen Wechselrichter abgelegt sein. Obwohl an allen Wechselrichtern des erfindungsgemäßen Systems die gleiche Eingangsgleichspannung anliegt, können die Wechselrichter über unterschiedliche Kennlinien aus der Eingangsgleichspannung unterschiedliche maximal mögliche aktuell wandelbare Leistungen für die jeweilige Lasteinheit bestimmen. Durch dieses Merkmal kann auch ohne übergeordnete Steuerung eine ungleiche Verteilung der lokal erzeugten Energie realisiert werden, falls dies gewünscht ist. Selbstverständlich kann aber auch, falls eine Gleichverteilung angestrebt ist, in jedem Wechselrichter des erfindungsgemäßen Systems dieselbe Kennlinie hinterlegt sein, so dass bei gleichem Energieverbrauch der angeschlossenen Lasten dieselbe aktuell zu wandelnde Leistung von den Wechselrichtern ermittelt wird.

In einer weiteren vorteilhaften Ausführungsform des erfindungsgemäßen Systems wird für mindestens eine Lasteinheit die vom Wechselrichter der betreffenden Lasteinheit gewandelte Leistung innerhalb eines Zeitfensters aufsummiert. Ist ein Schwellwert für die aufsummierte Leistung -mithin ein Energie-Schwellwert- der betreffenden Lasteinheit vorgegeben, senkt der Wechselrichter der betreffenden Lasteinheit bei Erreichen des Schwellwertes seine aktuell gewandelte Leistung auf null ab. Werden verschiedene Zeitfenster für unterschiedlich Lasteinheiten des Weiteren über den Tagesverlauf verteilt vorgesehen, kann auf diese Weise erreicht werden, dass die von der lokalen Gleichstromquelle bereitgestellte Energie sozusagen in Portionen aufgeteilt und über den Tagesverlauf verteilt von den Wechselrichtern des erfindungsgemäßen Systems auf die verschiedenen Lasteinheiten aufgeteilt werden kann, ohne dass dazu eine übergeordnete Steuerung benötigt würde.

In einer besonders bevorzugten Ausführungsform enthält das erfindungsgemäße System des Weiteren eine Speichereinheit. Die Speichereinheit umfasst mindestens eine Batterie und einen bidirektionalen Gleichstromsteller, wobei der bidirektionale Gleichstromsteller mit einem ersten Anschluss mit der Gleichstromquelle und mit einem zweiten Anschluss mit der Batterie verbunden ist. Der bidirektionale Gleichstromsteller ermittelt aus einer an seinem ersten Anschluss anliegenden Eingangsgleichspannung gemäß einer vorgegebenen zweiten Kennlinie eine maximal mögliche aktuell speicherbare Leistung. Ähnlich wie die Wechselrichter in den Lasteinheiten ermittelt in der Speichereinheit der bidirektionale Gleichstromsteller aus der aktuellen Eingangsspannungshöhe beispielsweise durch einen Vergleich mit hinterlegten Schwellwerten, Kennlinien oder ähnlichem, ob die lokale Gleichstromquelle noch über Leistungsreserven verfügt. Ist lokal noch bislang ungenutzte Leistung vorhanden, kann diese in der Batterie gespeichert werden. In einer weiteren Ausführungsform unterscheidet sich die vorgegebene zweite Kennlinie von der vorgegebenen ersten Kennlinie. Hierdurch kann beispielsweise erreicht werden, dass zunächst die an die Lasteinheiten angeschlossenen Lasten mit elektrischer Energie versorgt werden und erst nachrangig die Batterie geladen wird. Wird das erfindungsgemäße System zur Eigenverbrauchsoptimierung genutzt, wird man dem direkten, lokalen Verbrauch den Vorzug vor der Speicherung von Energie einräumen. Hierdurch können einerseits Umwandungsverluste beim Speichern und Entladen in/aus der Batterie vermieden werden. Andererseits kann die Batterie wesentlich kleiner dimensioniert werden, was angesichts der Tatsache, dass elektrische Speichertechnik noch immer sehr teuer ist, das erfindungsgemäße System weiterhin kostengünstig gestaltet.

In einer weiteren vorteilhaften Ausführungsform des erfindungsgemäßen Systems ermittelt der bidirektionale Gleichstromsteller aus einer an seinem ersten Anschluss anliegenden Eingangsgleichspannung gemäß der vorgegebenen zweiten Kennlinie eine aktuell benötigte Entladeleistung. Ist der lokale Energieverbrauch höher als die gleichzeitig zur Verfügung stehende Leistung aus der lokalen Gleichstromquelle und sinkt beispielsweise die anliegende Eingangsgleichspannung unter eine vordefinierte Schwelle, kann dies ein Signal an den bidirektionale Gleichstromsteller sein, Energie aus der Batterie in die Gleichstromverteilung des erfindungsgemäßen Systems einzuspeisen. Hierdurch kann der Eigenverbrauch der lokal erzeugten Energie weiter gesteigert werden.

Sind alle angeschlossenen Lasten aus der lokalen Gleichstromquelle versorgt und auch die Speicherkapazität der Batterie voll genutzt, können beispielsweise weitere variable Lasten vorgesehen sein, die eingeschaltet werden, um überschüssig vorhandene lokale Energie zu verbrauchen. Das Einschalten der variablen Lasten könnte beispielsweise über ein spezielles, auf die elektrischen Leitungen aufmoduliertes Signal (Broadcast-Signal) ausgelöst werden. Ist kein weiterer lokaler Verbrauch mehr möglich, kann die lokale Gleichstromquelle abgeregelt werden, d.h. in Ihrer Leistung so zurückgefahren werden, dass sich lokale Erzeugung und Verbrauch ausgleichen. Eine Einspeisung von Energie ins Verbundnetz ist im erfindungsgemäßen System nicht vorgesehen.

Ein erfindungsgemäßes System zeichnet sich durch besonders kompakte und kostengünstige Komponenten aus und ist ideal geeignet, um beispielsweise in einem Mehrfamilienhaus die Energie einer gemeinsam genutzten Photovoltaikanlage zu verteilen. Dies ist insbesondere auch bei der Nachrüstung eines Hauses mit einer Photovoltaikanlage vorteilhaft, da nur wenige Installationsschritte durchzuführen und Komponenten zu installieren sind. Übliche elektrische Verteiler, insbesondere Wohnungsverteiler, weisen einen Anschluss an das Wechselspannungsverteilnetz auf und sind mit einem Stromzähler ausgerüstet, der den Energieverbrauch der Wohnung/Untereinheit oder ähnlichem misst. Die elektrische Leistung wird auf mit Sicherungen ausgestattete Leitungen verteilt, die an die jeweiligen Verbrauchsstellen herangeführt werden.

Eine besonders bevorzugte Ausführungsform betrifft einen Nachrüstsatz für einen elektrischen Verteiler, insbesondere einen Wohnungsverteiler, zum Einsatz in einem erfindungsgemäßen System. Der Nachrüstsatz umfasst dabei einen Wechselrichter mit einem Wechselrichterausgang, der eingerichtet ist, mit einem Wechselspannungseingang des Verteilers verbunden zu werden. Der Wechselrichter weist einen Wechselrichtereingang auf, der eingerichtet ist, mit mindestens einer erneuerbaren Gleichstromquelle verbunden zu werden, und eine Steuerung, die eine am Wechselrichtereingang anliegende Eingangsgleichspannung ermittelt. Ferner umfasst der Nachrüstsatz eine Kommunikationsverbindung zur Übermittlung von Leistungsbezugsdaten von einem in dem Verteiler angeordneten Zähler an den Wechselrichter und einen Anschluss für eine Gleichstromverteilung zur Verbindung des Verteilers mit der erneuerbaren Gleichstromquelle. Die Steuerung bestimmt aus der anliegenden Eingangsgleichspannung und übermittelten Leistungsbezugsdaten eine aktuell zu wandelnde Leistung.

Auf diese Weise werden über die Installation der erneuerbaren Gleichstromquelle, insbesondere Photovoltaikanlage auf dem Dach des Hauses, und einer Leitung als Gleichstromverteilung durch einen zentralen Installationsschacht des Hauses und deren Heranführen an die Wohnungsverteilerkästen hinaus keine weiteren aufwändigen Installationsarbeiten nötig. Da der Wechselrichter für eine Wohneinheit bei einem haushaltsüblichen Energieverbrauch sehr kompakt ausfallen kann, können die Komponenten des Nachrüstsatzes in der Regel im vorhandenen Wohnungsverteiler untergebracht werden. So lässt sich eine kostengünstige und aufwandsarme nachträgliche Installation einer gemeinsam zu nutzenden Photovoltaikanlage insbesondere in einem Mehrfamilienhaus realisieren.

Die Erfindung wird nachfolgend anhand von Ausführungsbeispielen unter Heranziehung von Zeichnungen beschrieben, aus denen sich, in Zusammenschau mit den Merkmalen der Ansprüche, weitere Merkmale, Eigenschaften und Vorteile der Erfindung ergeben.

Es zeigen:
- Fig.1: eine schematische Darstellung einer beispielhaften Ausgestaltung eines erfindungsgemäßen Systems
- Fig. 2: eine beispielhafte Ausgestaltung einer Lasteinheit eines erfindungsgemäßen Systems
- Fig. 3: eine beispielhafte Ausgestaltung einer Speichereinheit eines erfindungsgemäßen Systems

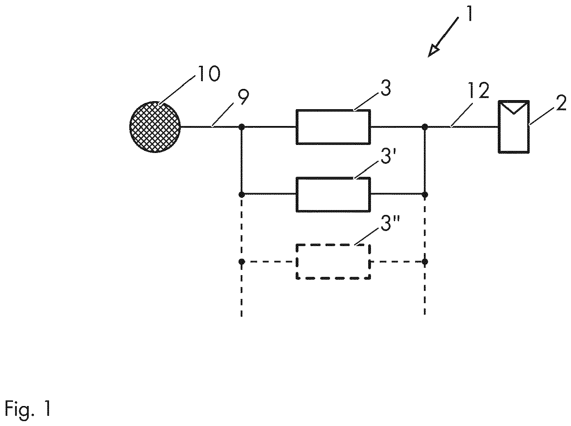

Figur 1 zeigt schematisch wie eine beispielhafte Ausgestaltung eines erfindungsgemäßen Systems 1. Lasteinheiten 3, 3', 3" sind an einem Verbundnetzanschluss 9 an ein Verbundnetz 10 angeschlossen. Dabei kann es sich beispielsweise um ein Niederspannungsverteilnetz eines öffentlichen Wechselspannungsnetzes handeln, das in der Regel von einem Netzbetreiber bereitgestellt wird und oft mehrphasig ausgeführt ist. Bei den Lasteinheiten 3, 3', 3" kann es sich um verschiedene Wohnungen eines Mehrfamilienhauses, um Etagen oder andere Untereinheiten eines Gebäudes oder Betriebs handeln. Des Weiteren sind die Lasteinheiten 3, 3', 3" an eine Gleichstromverteilung 12 angeschlossen an die auch eine gemeinsam genutzte Gleichstromquelle 2 angeschlossen ist. Bei der Gleichstromquelle 2 kann es sich beispielsweise um eine Photovoltaikanlage auf dem Dach eines Mehrfamilienhauses handeln. In diesem Falle wird in der Regel auch ein DC/DC Steller (nicht gezeigt) zwischen PV-Generator und Gleichstromverteilung 12 angeordnet sein, der den PV-Generator in seinen Punkt maximaler Leistung (MPP) regelt.

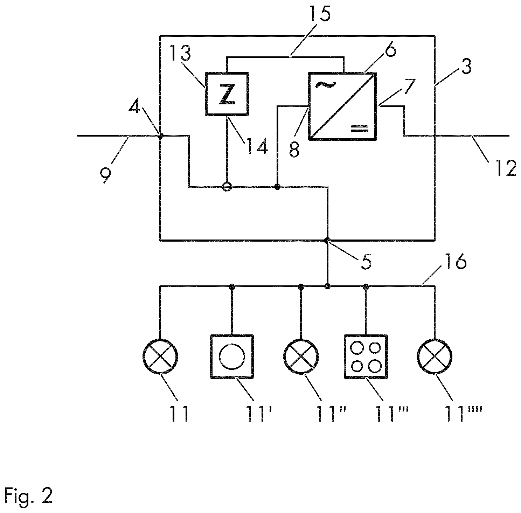

Figur 2 zeigt eine beispielhafte Ausgestaltung einer Lasteinheit 3 wie sie in einem erfindungsgemäßen System 1 enthalten sein kann. Die Lasteinheit 3 ist an ihrem Eingang 4 den Verbundnetzanschluss 9 und an eine Gleichstromverteilung 12, wie oben beschrieben, angeschlossen. Des Weiteren umfasst die Lasteinheit 3 auch einen Ausgang 5, an den über eine Wechselstromverteilung 16 elektrische Lasten 11, 11', 11", 11''' angeschlossen sind. Bei den Lasten 11, 11', 11", 11''' kann es sich um haushaltsübliche Lasten wie Beleuchtungskörper, Waschmaschinen, Herde etc. aber auch um Produktionsmaschinen, beispielsweise in einem Betrieb, handeln. Die Lasten 11, 11', 11", 11''', ... können zur Aufnahme von ein- oder mehrphasiger Wechselstromleistung eingerichtet sein, die Wechselstromverteilung 16 kann, wie beispielsweise im Haushalt üblich, einphasige Lasten auf mehrere Phasen verteilen. In der Lasteinheit 3 wird mittels eines Leistungsmessers 13 der aktuelle Leistungsbezug aus dem Verbundnetz 10 ermittelt. Dazu ist ein Leistungsmessereingang 14 mit dem Eingang 4 verbunden. Der Leistungsmesser 13 kann ein Stromzähler sein, wie er beispielsweise in einer Wohnung eines Mehrfamilienhauses üblicherweise vorhanden ist. Dieser muss allerdings mindestens zur Übermittlung der von ihm aktuell gemessenen Leistungsbezugsdaten eingerichtet sein.

Die Lasteinheit 3 umfasst ferner einen Wechselrichter 6, der mit seinem Wechselrichtereingang 7 an die Gleichstromverteilung 12 angeschlossen und mit seinem Wechselrichterausgang 8 an die Verbindung zwischen Eingang 4 und Ausgang 5 der Lasteinheit 3 angeschlossen ist. Der Wechselrichter 6 ist eingerichtet, an seinem Eingang zur Verfügung stehende DC-Leistung in netzkonforme AC-Leistung zu wandeln und letztere in die Verbindung zwischen Eingang 4 und Ausgang 5 der Lasteinheit 3, respektive die Wechselstromverteilung 16 einzuspeisen.

Der Leistungsmesser 13 übermittelt seine aktuell gemessenen Leistungsbezugsdaten über einen Leistungsmesserausgang 15 an den Wechselrichter 6. Diese Übermittlung kann drahtgebunden oder drahtlos geschehen. Die dem erfindungsgemäßen System 1 zugrunde liegende Idee ist es, die von der Gleichstromquelle 2 bereitgestellte Leistung möglichst vollständig innerhalb des Systems 1 zu verbrauchen. Dazu kann der Wechselrichter 6 so eingerichtet sein, dass er die von ihm eingespeiste Leistung so weit erhöht, bis der Leistungsbezug aus dem Verbundnetz auf null Watt abgesunken ist. Dann werden entweder alle an die Lasteinheit 3 angeschlossenen Lasten 11, 11', 11", 11''' aus der lokalen Gleichstromquelle 2 versorgt (oder es findet gar kein Verbrauch statt).

Um zu ermitteln, ob die Gleichstromquelle 2 über Leistungsreserven verfügt, d.h. ob der Wechselrichter 6 die von ihm eingespeiste Leistung weiter erhöhen kann, um die angeschlossenen Lasten 11, 11', 11", 11''', ... mit mehr Leistung zu versorgen, kann der Wechselrichter 6 beispielsweise die an seinem Eingang 7 anliegende DC-Spannung messen. Bei hoher Belastung der Gleichstromquelle 2 kann die DC-Spannung sinken. So kann der Wechselrichter 6 beispielsweise aus einer unter einen vorgegebenen Schwellwert abgesunkenen DC-Spannung schließen, dass er die von ihm gewandelte Leistung nicht weiter erhöhen kann. Sinkt die DC-Spannung weiter ab, kann hinterlegt sein, dass der Wechselrichter 6 die von ihm eingespeiste Leistung reduziert. Umgekehrt kann eine hohe DC-Spannung anzeigen, dass eine Steigerung der gewandelten Leistung möglich ist.

Alternativ könnte der Wechselrichter 6 ein auf die Eingangsgleichspannung aufmoduliertes Signal als Indikator der Leistungsreserven der Gleichstromquelle 2 an seinem Wechselrichtereingang 7 ermitteln. Dieses Signal kann von einem zwischen PV-Generator und Gleichstromverteilung 12 angeordneten DC/DC Steller (nicht gezeigt) auf die Eingangsgleichspannung moduliert werden und Schwellwerte für dieses Signal können dann, wie oben beschrieben, zur Ermittlung der Leistungsreserven der Gleichstromquelle 2 dienen. Die Schwellwerte oder Kennlinien zur Beschreibung des Zusammenhanges von Signal- oder DC-Spannungsgröße und den Leistungsreserven der Gleichstromquelle 2 können in der Steuerung (nicht gezeigt) des Wechselrichters 6 abgelegt sein.

Die Komponenten einer Lasteinheit 3 lassen sich gut in einen üblichen elektrischen Verteilerkasten einer Wohnung integrieren. Da der Stromzähler und die Anschlüsse 4 und 5 dort meist schon vorhanden sind, kann durch den zusätzlichen Einbau eines Wechselrichters 6, das Heranführen der Gleichstromverteilung 12 und die Einrichtung einer Kommunikationsverbindung zwischen Stromzähler 13 und Wechselrichter 6 der Verteilerkasten auch nachträglich leicht zu einer Lasteinheit 3 zum Einsatz im erfindungsgemäßen Systems 1 ertüchtigt werden.

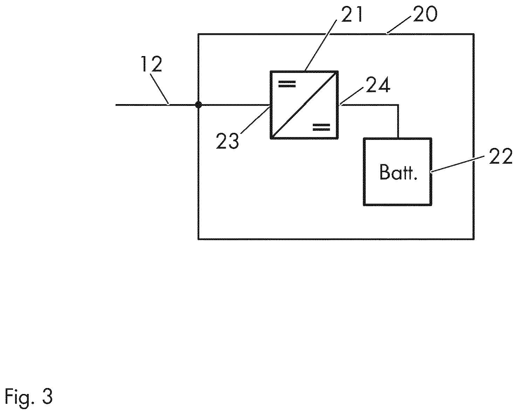

Figur 3 zeigt eine beispielhafte Ausgestaltung einer Speichereinheit 20 zum Einsatz in einem erfindungsgemäßen System 1. Die Speichereinheit 20 umfasst eine Batterie 22 und einen bidirektionalen Gleichstromsteller (DC/DC-Wandler) 21. Der DC/DC-Wandler 21 ist mit einem Anschluss 23 an die Gleichstromverteilung 12 und über diese an die Gleichstromquelle 2 angeschlossen. Mit einem Anschluss 24 ist der DC/DC-Wandler 21 an die Batterie 22 angeschlossen, wobei die Batterie 22 aus mehreren Batterie-Untereinheiten bzw. aus mehreren Batterien bestehen kann. Der DC/DC-Wandler 21 fungiert einerseits als Laderegler, indem er aus der Gleichstromverteilung 12 Energie entnimmt und in die Batterie 22 einspeichert, andererseits steuert der DC/DC-Wandler 21 auch die Entnahme und Einspeisung von Energie aus der Batterie 22 in die Gleichstromverteilung 12. Ähnlich wie die oben beschriebene Lasteinheit 3 kann der DC/DC-Wandler 21 die an seinem Anschluss (23) anliegende DC-Spannung oder ein auf die Eingangsgleichspannung aufmoduliertes Signal als Indikator der Leistungsreserven der Gleichstromquelle 2 messen. In der Steuerung des DC/DC-Wandler 21 ist eine zweite Kennlinie abgelegt, die eine Beziehung zwischen elektrischen Kenngrößen herstellt beispielsweise zwischen der anliegenden DC-Spannungshöhe und einer verfügbaren DC-Leistung bzw. der maximal möglichen aktuell speicherbaren Leistung. Diese zweite Kennlinie kann eine im Vergleich zur ersten Kennlinie unterschiedliche Steigung haben, woraus ein unterschiedliches Ansprechverhalten von Lasteinheiten und Speichereinheiten in Bezug auf die gleiche gemessene DC-Spannungshöhe resultiert. Dies kann bewirken, dass zunächst die an die Lasteinheiten angeschlossenen Lasten mit elektrischer Energie versorgt werden und erst nachrangig die Batterie geladen wird.

Sinkt beispielsweise die gemessene DC-Spannungshöhe unter eine weitere, tiefer liegende Schwelle, kann dies der Hinweis auf einen im Vergleich zur lokalen Erzeugung höheren lokalen Verbrauch an elektrischer Leistung sein. Dies kann das Signal für die Speichereinheit sein, ihre gespeicherte Energie wieder in die Gleichstromverteilung 12 einzuspeisen. So kann die zuvor lokal überschüssig vorhandene Energie wieder dem Eigenverbrauch zugeführt werden.

### Bezugszeichenliste

- 1: System
- 2: Gleichstromquelle
- 3, 3', 3", ...: Lasteinheit
- 4: Eingang
- 5: Ausgang
- 6: Wechselrichter
- 7: Wechselrichtereingang
- 8: Wechselrichterausgang
- 9: Verbundnetzanschluss
- 10: Verbundnetz
- 11, 11', 11", 11''', ...: Last
- 12: Gleichstromverteilung
- 13: Leistungsmesser
- 14: Leistungsmessereingang
- 15: Leistungsmesserausgang
- 16: Wechselstromverteilung
- 20: Speichereinheit
- 21: Gleichstromsteller
- 22: Batterie
- 23: Anschluss
- 24: Anschluss

## Patentansprüche

1. System (1) zur Verteilung lokal erzeugter Energie aus mindestens einer erneuerbaren Gleichstromquelle (2) auf mehrere lokale Lasteinheiten (3, 3', 3") des Systems (1), umfassend pro Lasteinheit (3, 3', 3")
• einen Eingang (4) zur Verbindung mit einem Verbundnetz (10),
• einen Ausgang (5) zur Verbindung mit mindestens einer Last (11, 11', 11"),
• einen Wechselrichter (6) mit einem Wechselrichtereingang (7) und einem Wechselrichterausgang (8), wobei der Wechselrichtereingang (7) mit der Gleichstromquelle (2) verbunden ist und der Wechselrichterausgang (8) mit dem Eingang (4) und dem Ausgang (5) der jeweiligen Lasteinheit (3, 3', 3") verbunden ist und wobei der Wechselrichter (6) einem Gleichstrom an dem Wechselrichtereingang (7) in einen Wechselstrom an dem Wechselrichterausgang (8) wandelt,
• einen Leistungsmesser (13) mit einem Leistungsmessereingang (14), der mit dem Eingang (4) der jeweiligen Lasteinheit (3, 3', 3") verbunden ist, um einen aktuellen Leistungsbezug aus dem Verbundnetz (10) zu ermitteln und mit einem Leistungsmesserausgang (15), der mit dem Wechselrichter (6) der jeweiligen Lasteinheit (3, 3', 3") verbunden ist, um Daten über den aktuellen Leistungsbezug aus dem Verbundnetz (10) an den Wechselrichter (6) zu übermitteln
**dadurch gekennzeichnet, dass**
der Wechselrichter (6) der jeweiligen Lasteinheit (3, 3', 3") dazu eingerichtet ist, eine an seinem Wechselrichtereingang (7) anliegende Eingangsgleichspannung zu ermitteln und aus der anliegenden Eingangsgleichspannung und den übermittelten Leistungsbezugsdaten eine aktuell zu wandelnde Leistung zu bestimmen.

2. System nach Anspruch 1, wobei der Wechselrichter (6) der jeweiligen Lasteinheit (3, 3', 3") aus der an seinem Wechselrichtereingang (7) anliegenden Eingangsgleichspannung gemäß einer vorgegebenen ersten Kennlinie eine maximal mögliche aktuell wandelbare Leistung ermittelt.

3. System nach Anspruch 2, wobei der Wechselrichter (6) der jeweiligen Lasteinheit (3, 3', 3"), falls die maximal mögliche aktuell wandelbare Leistung größer oder gleich groß ist wie der Leistungsbezug aus dem Verbundnetz (10), die aktuell zu wandelnde Leistung so bestimmt, dass der Leistungsbezug aus dem Verbundnetz (10) einen voreingestellten Grenzwert annimmt.

4. System nach Anspruch 3, wobei der voreingestellte Grenzwert 0 kW beträgt.

5. System nach Anspruch 2, wobei der Wechselrichter (6) der jeweiligen Lasteinheit (3, 3', 3"), falls die maximal mögliche aktuell wandelbare Leistung kleiner ist als der Leistungsbezug aus dem Verbundnetz (10), die aktuell zu wandelnde Leistung so bestimmt, dass sie der Höhe der maximal möglichen aktuell wandelbaren Leistung entspricht, so dass der Leistungsbezug aus dem Verbundnetz (10) minimiert wird.

6. System nach Anspruch 1, wobei die Wechselrichter (6) unidirektionale und galvanisch-trennende Wechselrichter sind.

7. System nach Anspruch 2, wobei die ersten Kennlinien der jeweiligen Lasteinheiten (3, 3', 3") sich voneinander unterscheiden.

8. System nach Anspruch 2, wobei für mindestens eine Lasteinheit (3, 3', 3") die vom Wechselrichter (6) der betreffenden Lasteinheit gewandelte Leistung innerhalb eines Zeitfensters aufsummiert wird und ein Schwellwert für die aufsummierte Leistung der betreffenden Lasteinheit vorgegeben ist, wobei bei Erreichen des Schwellwertes der Wechselrichter (6) der betreffenden Lasteinheit (3, 3', 3") seine aktuell gewandelte Leistung auf null absenkt.

9. System nach Anspruch 1, weiter enthaltend eine Speichereinheit (20) umfassend mindestens eine Batterie (22) und einen bidirektionalen Gleichstromsteller (21), wobei der bidirektionale Gleichstromsteller (21) mit einem ersten Anschluss (23) mit der Gleichstromquelle (2) und mit einem zweiten Anschluss (24) mit der Batterie (22) verbunden ist und wobei der bidirektionale Gleichstromsteller (21) aus einer an seinem ersten Anschluss (23) anliegenden Eingangsgleichspannung gemäß einer vorgegebenen zweiten Kennlinie eine maximal mögliche aktuell speicherbare Leistung ermittelt.

10. System nach Anspruch 9, wobei die vorgegebene zweite Kennlinie sich von der vorgegebenen ersten Kennlinie unterscheidet.

11. System nach Anspruch 9, wobei der bidirektionale Gleichstromsteller (21) aus einer an seinem ersten Anschluss (23) anliegenden Eingangsgleichspannung gemäß der vorgegebenen zweiten Kennlinie eine aktuell benötigte Entladeleistung ermittelt.

12. Nachrüstsatz für einen elektrischen Verteiler, insbesondere einen Wohnungsverteiler, zum Einsatz in einem erfindungsgemäßen System (1) nach einem der vorhergehenden Ansprüche umfassend
- einen Wechselrichter (6) mit
- einem Wechselrichterausgang (8) zur Verbindung mit einem Wechselspannungseingang des Verteilers,
- einem Wechselrichtereingang (7) zur Verbindung mit mindestens einer erneuerbaren Gleichstromquelle (2), und
- einer Steuerung zur Ermittlung einer am Wechselrichtereingang (7) anliegende Eingangsgleichspannung und zur Bestimmung einer aktuell zu wandelnden Leistung aus der anliegenden Eingangsgleichspannung und den übermittelten Leistungsbezugsdaten
- eine Kommunikationsverbindung (15) zur Übermittlung der Leistungsbezugsdaten von einem in dem Verteiler angeordneten Zähler (13) an den Wechselrichter (6) und
- einen Anschluss für eine Gleichstromverteilung (12) zur Verbindung des Verteilers mit der erneuerbaren Gleichstromquelle (2).

## Claims

1. A system (1) for distributing locally generated energy from at least one renewable DC source (2) to a plurality of local load units (3, 3', 3") of the system (1), comprising, for each load unit (3, 3', 3"),
• an input (4) for connection to an integrated grid (10),
• an output (5) for connection to at least one load (11, 11', 11"),
• an inverter (6) having an inverter input (7) and an inverter output (8), wherein the inverter input (7) is connected to the DC source (2) and the inverter output (8) is connected to the input (4) and to the output (5) of the respective load unit (3, 3', 3"), and wherein the inverter (6) converts a direct current at the inverter input (7) into an alternating current at the inverter output (8),
• a power meter (13) having a power meter input (14), which is connected to the input (4) of the respective load unit (3, 3', 3") in order to determine a current power consumption from the integrated grid (10), and having a power meter output (15), which is connected to the inverter (6) of the respective load unit (3, 3', 3") in order to transmit data relating to the current power consumption from the integrated grid (10) to the inverter (6),
**characterized in that**
the inverter (6) of the respective load unit (3, 3', 3") is configured to determine an input DC voltage applied to its inverter input (7) and to determine a power to be currently converted from the applied input DC voltage and the transmitted power consumption data.

2. The system as claimed in claim 1, wherein the inverter (6) of the respective load unit (3, 3', 3") determines a maximum possible power which can be currently converted from the input DC voltage applied to its inverter input (7) according to a predefined first characteristic curve.

3. The system as claimed in claim 2, wherein, if the maximum possible power which can be currently converted is greater than or equal to the power consumption from the integrated grid (10), the inverter (6) of the respective load unit (3, 3', 3") determines the power to be currently converted in such a manner that the power consumption from the integrated grid (10) assumes a preset limit value.

4. The system as claimed in claim 3, wherein the preset limit value is 0 kW.

5. The system as claimed in claim 2, wherein, if the maximum possible power which can be currently converted is less than the power consumption from the integrated grid (10), the inverter (6) of the respective load unit (3, 3', 3") determines the power to be currently converted in such a manner that it corresponds to the level of the maximum possible power which can be currently converted, with the result that the power consumption from the integrated grid (10) is minimized.

6. The system as claimed in claim 1, wherein the inverters (6) are unidirectional and galvanically isolating inverters.

7. The system as claimed in claim 2, wherein the first characteristic curves of the respective load units (3, 3', 3") differ from one another.

8. The system as claimed in claim 2, wherein, for at least one load unit (3, 3', 3"), the power converted by the inverter (6) of the concerned load unit is summed within a time window and a threshold value is predefined for the summed power of the relevant load unit, wherein the inverter (6) of the concerned load unit (3, 3', 3") reduces its currently converted power to zero upon reaching the threshold value.

9. The system as claimed in claim 1, further comprising a storage unit (20) comprising at least one battery (22) and a bidirectional DC converter (21), wherein a first connection (23) of the bidirectional DC converter (21) is connected to the DC source (2) and a second connection (24) of the bidirectional DC converter (21) is connected to the battery (22), and wherein the bidirectional DC converter (21) determines a maximum possible power which can be currently stored from an input DC voltage applied to its first connection (23) according to a predefined second characteristic curve.

10. The system as claimed in claim 9, wherein the predefined second characteristic curve differs from the predefined first characteristic curve.

11. The system as claimed in claim 9, wherein the bidirectional DC converter (21) determines a currently required discharge power from an input DC voltage applied to its first connection (23) according to the predefined second characteristic curve.

12. A retrofit kit for an electrical distributor, in particular an apartment distributor, for use in a system (1) according to the invention as claimed in one of the preceding claims, comprising
- an inverter (6) comprising
- an inverter output (8) for connection to an alternating voltage input of the distributor,
- an inverter input (7) for connection to at least one renewable DC source (2), and
- a controller for determining an input DC voltage applied to the inverter input (7) and for determining a power to be currently converted from the applied input DC voltage and the transmitted power consumption data,
- a communication connection (15) for transmitting the power consumption data from a meter (13) arranged in the distributor to the inverter (6), and
- a connection for a DC distribution (12) for connecting the distributor to the renewable DC source (2).

## Revendications

1. Système (1) de distribution d'énergie produite localement à partir d'au moins une source de courant continu renouvelable (2) sur plusieurs unités de charge (3, 3', 3") locales du système (1), comprenant par unité de charge (3, 3', 3"),
• une entrée (4) destinée à être raccordée à un réseau interconnecté (10),
• une sortie (5) destinée à être raccordée à au moins une charge (11, 11', 11"),
• un onduleur (6) pourvu d'une entrée d'onduleur (7) et d'une sortie d'onduleur (8), dans lequel l'entrée d'onduleur (7) est raccordée à la source de courant continu (2) et la sortie d'onduleur (8) est raccordée à l'entrée (4) et à la sortie (5) de l'unité de charge (3, 3', 3") respective et dans lequel l'onduleur (6) transforme un courant continu sur l'entrée d'onduleur (7) en un courant alternatif sur la sortie d'onduleur (8),
• un système de mesure de puissance (13) pourvu d'une entrée de système de mesure de puissance (14) qui est raccordée à l'entrée (4) de l'unité de charge (3, 3', 3") respective afin de déterminer un approvisionnement instantané en puissance issue du réseau interconnecté (10) et pourvu d'une sortie de système de mesure de puissance (15) qui est raccordée à l'onduleur (6) de l'unité de charge (3, 3', 3") respective afin de transmettre des données concernant l'approvisionnement instantané en puissance issue du réseau interconnecté (10) à l'onduleur (6),
**caractérisé en ce que** l'onduleur (6) de l'unité de charge (3, 3', 3") respective est conçu pour déterminer une tension continue d'entrée appliquée sur son entrée d'onduleur (7) et pour déterminer, à partir de la tension continue d'entrée appliquée et des données d'approvisionnement en puissance transmises, une puissance instantanée à convertir.

2. Système selon la revendication 1, dans lequel l'onduleur (6) de l'unité de charge (3, 3', 3") respective détermine une puissance instantanée convertissable maximale possible de la tension continue appliquée sur son entrée d'onduleur (7) conformément à une première courbe caractéristique prédéterminée.

3. Système selon la revendication 2, dans lequel l'onduleur (6) de l'unité de charge (3, 3', 3") respective, dans le cas où la puissance instantanée convertissable maximale possible est supérieure ou égale à l'approvisionnement en puissance issue du réseau interconnecté (10), détermine la puissance instantanée à convertir de manière à ce que l'approvisionnement en puissance issue du réseau interconnecté (10) prenne une valeur limite préréglée.

4. Système selon la revendication 3, dans lequel la valeur limite préréglée est de 0 kW.

5. Système selon la revendication 2, dans lequel l'onduleur (6) de l'unité de charge (3, 3', 3") respective, dans le cas où la puissance instantanée convertissable maximale possible est inférieure à l'approvisionnement en puissance issue du système interconnecté (10), détermine la puissance instantanée à convertir de manière à ce qu'elle corresponde à la puissance instantanée convertissable maximale possible afin de minimiser l'approvisionnement en puissance issue du réseau interconnecté (10).

6. Système selon la revendication 1, dans lequel les onduleurs (6) sont des onduleurs unidirectionnels et à séparation galvanique.

7. Système selon la revendication 2, dans lequel les premières courbes caractéristiques des unités de charge (3, 3', 3") respectives sont différentes les unes des autres.

8. Système selon la revendication 2, dans lequel, pour au moins une unité de charge (3, 3', 3"), la puissance convertie par l'onduleur (6) de l'unité de charge respective est totalisée à l'intérieur d'une fenêtre temporelle et une valeur de seuil pour la puissance totalisée de l'unité de charge respective est prédéterminée, dans lequel l'onduleur (6) de l'unité de charge (3, 3', 3") concernée réduit sa puissance convertie instantanée à zéro lorsque la valeur de seuil est atteinte.

9. Système selon la revendication 1, comprenant en outre une unité de accumulateur (20) comprenant au moins une batterie (22) et un régulateur à courant continu bidirectionnel (21), dans lequel le régulateur à courant continu bidirectionnel (21) est raccordé par une première borne (23) à la source de courant continu (2) et par une seconde borne (24) à la batterie (22) et dans lequel le régulateur à courant continu bidirectionnel (21) détermine une puissance instantanée maximale possible pouvant être stockée à partir d'une tension continue d'entrée appliquée sur sa première borne (23) conformément à une seconde courbe caractéristique prédéterminée.

10. Système selon la revendication 9, dans lequel la seconde courbe caractéristique prédéterminée diffère de la première courbe caractéristique prédéterminée.

11. Système selon la revendication 9, dans lequel le régulateur à courant continu bidirectionnel (21) détermine une puissance de décharge instantanée nécessaire à partir d'une tension continue d'entrée appliquée sur sa première borne (23) conformément à la seconde courbe caractéristique prédéterminée.

12. Kit de modification pour un distributeur électrique, en particulier un distributeur d'appartement, destiné à être utilisé dans un système (1) conforme à l'invention selon l'une des revendications précédentes, comprenant
- un onduleur (6) comportant
- une sortie d'onduleur (8) destinée à être raccordée à une entrée de tension alternative du distributeur,
- une entrée d'onduleur (7) destinée à être raccordée à au moins une source de courant continu renouvelable (2), et
- une unité de commande destinée à déterminer une tension d'entrée continue appliquée sur l'entrée d'onduleur (7) et à déterminer une puissance instantanée à convertir à partir de la tension d'entrée continue appliquée et des données de référence de puissance transmises,
- une liaison de communication (15) destinée à transmettre les données approvisionnement de puissance depuis un compteur (13) disposé dans le distributeur à l'onduleur (6) et
- une borne destinée à une distribution de courant continu (12) pour raccorder le distributeur à la source de courant continu renouvelable (2).
